# EUROPEAN PATENT APPLICATION

(11) **EP 4 670 489 A1**
(43) Date of publication of application: **31.12.2025**
(21) Application number: 25179252.9
(22) Date of filing: 28.05.2025
(51) Int. Cl.: A01F 15/00, A01F 15/08, B30B 9/30

(54) **MONITORING KNIFE CONDITION IN BALING SYSTEMS**

(30) Priority: 27.06.2024 GB 202409314
(71) Applicant: AGCO International GmbH, 8212 Neuhausen am Rheinfall (CH)
(72) Inventor: SCHLICHTING, Malte Cornelius, 38304 Wolfenbüttel (DE)
(74) Representative: AGCO Intellectual Property Department

(57) **Abstract**

A mechanism for determining a condition of a knife arrangement for a baler. A measure responsive to a torque for a drivetrain of the knife arrangement is processed to determine or predict the condition of the knife arrangement or a portion thereof.

## Description

### FIELD

Embodiments of the present disclosure relate generally to baling systems, and in particular to the monitoring of balers.

### BACKGROUND

With ever-increasing population numbers and ongoing interest in more environmentally friendly farming practices, there is an increasing desire to improve the quality and quantity of harvested crop or plant material.

Baling is an increasingly important part of agricultural practice. Baling machinery will gather and compress plant material in the form of a bale. More particularly, baling machinery will bale portions of plant material together to form or produce a bale.

A "rectangular bale" (having a cuboidal shape) is typically formed by iteratively gathering a portion of plant material and compressing the gathered portion of plant material to form a bale. Each iteration effectively produces a flake or layer of plant material for the bale. The accumulation of multiple flakes over multiple iterations produces a stack of layers of plant material forming the rectangular bale.

A "round bale" or "rolled bale" is formed by continually gathering portions of plant material and wrapping or rolling the gathered portions.

Any suitable form of plant material may be baled, including any crop material or other herbaceous plant material (such as hay, cotton or silage). A wide variety of plant material suitable for baling will be readily apparent to the skilled person.

There is an ongoing demand to improve the reliability and efficacy of the baling machinery and/or baler comprising the baling machinery.

### BRIEF SUMMARY

According to examples in accordance with this disclosure, there is provided a computer-implemented method for generating knife condition information for a knife arrangement of a baler, wherein the knife arrangement is configured to process plant material received by the baler.

The computer-implemented method comprises: receiving at least one torque responsive measure, wherein each torque responsive measure is configured to change responsive to a change in a torque applied by a drivetrain for the knife arrangement of the baler; and processing the at least one torque responsive measure to produce knife condition information indicating a condition of the knife arrangement.

The present disclosure recognizes that the condition of a knife arrangement affects the torque applied by a drivetrain for the knife arrangement. In particular, the less efficient a knife arrangement, the greater the torque that needs to be applied by the drive train to achieve an otherwise similar/identical function of the knife arrangement. This is because a less efficient knife arrangement requires more force to cut through the plant material, which in turn requires more torque from the drivetrain.

The proposed method comprises processing a measure of torque in order to generate an indicator of knife condition. This provides a mechanism for automated detection of knife condition, eliminating the traditional reliance on human intervention and/or image analysis. This is particularly advantageous as it allows for continuous and real-time monitoring of the knife arrangement's condition, leading to more timely and accurate maintenance decisions.

Furthermore, the measure of torque used in this method may be generated for a separate purpose, such as monitoring the overall performance of the baler, and then repurposed for the determination of the knife arrangement's condition. This dual-purpose use of the torque measure not only enhances the efficiency of the system but also reduces the complexity and cost associated with having separate sensors or systems for different monitoring purposes.

The at least one torque responsive measure may comprise a measure of the torque applied by the drivetrain for the knife arrangement of the baler.

The at least one torque responsive measure may comprise a measure of a hydraulic pressure and/or electrical power supplied to a motor for the drivetrain of the knife arrangement of the baler.

The computer-implemented method may further comprise receiving a quantity measure, wherein the quantity measure indicates an amount of plant material processed by the knife arrangement, wherein the processing the at least one torque responsive measure comprises processing each at least one torque responsive measure further using the quantity measure.

This embodiment recognizes that the amount of plant material, and particularly a rate of plant material, processed by the knife arrangement will also influence or affect the torque applied by a drivetrain for the knife arrangement. By taking the amount of material into account when producing the knife arrangement, this influence or effect can be taken into account.

In some examples, the quantity measure indicates a rate of plant material flow at an intake to the baler. In other examples, the quantity measure indicates a growth rate of a bale formed by the baler using the plant material processed by the knife arrangement.

In some examples, processing each at least one torque responsive measure comprises scaling each at least one torque responsive measure using the quantity measure.

In this approach, each torque responsive measure is effectively normalized or calibrated using the quantity measure. This process is thereby designed to provide a relative measure of the torque applied by the drivetrain, e.g., per unit of plant material processed by the knife arrangement. This relative measure is a more accurate reflection of the actual load on the knife arrangement, as it takes into account the volume of plant material being processed.

By normalizing the torque responsive measure with the quantity measure, the method effectively adjusts the torque measure to account for variations in the amount of plant material being processed. This results in a more accurate indicator of the condition of the knife arrangement, as it more closely reflects the actual efficiency of the knife arrangement in processing the plant material, rather than just the raw torque applied by the drivetrain.

In some examples, scaling each at least one torque responsive measure comprises dividing each torque responsive measure by the quantity measure. This provides an efficient and accurate mechanism for scaling or normalizing the torque responsive measure(s) based on the quantity of material processed by the knife arrangement.

The computer-implemented method may further comprise comprising receiving plant condition information, indicative of a condition of the plant material processed by the knife arrangement, wherein the processing the at least one torque responsive measure comprises processing each at least one torque responsive measure further using the plant condition information.

This embodiment recognizes that the condition of plant material processed by the knife arrangement will also influence or affect the torque applied by a drivetrain for the knife arrangement. For instance, damper plant material may require additional force (and therefore increased torque applied by the drivetrain) to be processed by the knife arrangement. This is because damper plant material is generally denser and harder to cut through, thus requiring more force and therefore torque for processing.

By taking the material condition account when producing the knife arrangement, this influence or effect can therefore be mitigated or otherwise mitigated for producing more accurate knife condition information. This is particularly beneficial as it allows for a more nuanced understanding of the knife arrangement's performance, taking into account the specific conditions under which the knife arrangement is operating.

In some examples, the condition information indicates a moisture level of the plant material processed by the knife arrangement. It has been identified that a moisture level of plant material has a significant impact or effect on the cutting efficiency of a knife arrangement. Thus, using a moisture level of the plant material when producing the knife condition information increases or improves an accuracy of the knife condition information.

The computer-implemented method may further comprise receiving plant type information, indicative of a type of plant material processed by the knife arrangement, wherein the processing the at least one torque responsive measure comprises processing each at least one torque responsive measure further using the plant type information.

This embodiment recognizes that the type of plant material processed by the knife arrangement will also influence or affect the torque applied by a drivetrain for the knife arrangement. For instance, different types of plant material (e.g., hay vs. silage) will require different amounts of force to pass through the knife arrangement. Therefore, by taking the type of plant material into account when producing the knife arrangement, this influence or effect can therefore be mitigated or otherwise mitigated for producing more accurate knife condition information.

The plant type information may, for instance, indicate a type of feedstuff forming the plant material. A type of feedstuff may, for instance, indicate whether the plant material is any one of: "hay", "silage", "straw" or "other" - although other examples are known in the art. Each of these types of feedstuff has distinct physical properties that affect how easily they can be cut by the knife arrangement. Different types of feedstuff will require different levels of force to be processed by the knife arrangement. For instance, silage will require more force to be cut by the knife arrangement than straw or hay.

In some examples, the knife condition information indicates a cutting efficacy of the knife arrangement. This embodiment recognizes that the cutting efficacy of the knife arrangement can be determined or otherwise predicted from a torque responsive measure.

In some examples, processing the at least one torque responsive measure comprises: comparing each torque responsive measure to a respective threshold; and configuring the knife condition information responsive to whether or not any torque responsive measure breaches its respective threshold. This approach provides a thresholding technique for effectively determining whether or not the condition of the knife arrangement has deteriorated. This provides a reliable and effective mechanism for generating the knife condition information.

The step of configuring the knife condition information may be configured such that the knife condition information changes responsive to whether or not any torque responsive measure breaches its threshold for no less than a respective predetermined duration. This approach reduces an effect of noise or surges on the generated of the knife condition information.

There is also provided a computer program product comprising computer program code means which, when executed on a computing device having a processing system, cause the processing system to perform all of the steps of any herein proposed computer-implemented method.

There is also provided a processing system for generating knife condition information for a knife arrangement of a baler, wherein the knife arrangement is configured to process plant material received by the baler.

The processing system is configured to: receive at least one torque responsive measure, wherein each torque responsive measure is configured to change responsive to a change in a torque applied by a drivetrain for the knife arrangement of the baler; and process the at least one torque responsive measure to produce knife condition information indicating a condition of the knife arrangement.

There is also provided a baler comprising: the processing system; baling machinery configured to bale plant material received by the baling machinery, wherein the baling machinery comprises the knife arrangement; and one or more sensors configured to generate the one or more torque responsive measures by monitoring the baling machinery and/or the plant material.

### BRIEF DESCRIPTION OF THE DRAWINGS

One or more embodiments of the invention / disclosure will now be described, by way of example only, with reference to the accompanying drawings, in which:
FIG. 1 illustrates an agricultural baler system;
FIG. 2 illustrates a portion of a baler;
FIG. 3 illustrates a knife arrangement;
FIG. 4 illustrates a proposed method;
FIG. 5 illustrates another proposed method;
FIG. 6 illustrates another proposed method;
FIG. 7 illustrates a system comprising a proposed processing system; and
FIG. 8 illustrates an example of the proposed processing system.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure relates to a mechanism for determining a condition of a knife arrangement for a baler. A measure responsive to a torque for a drivetrain of the knife arrangement is processed to determine or predict the condition of the knife arrangement or a portion thereof.

Embodiments are based on the realization that a deterioration in the condition of a knife arrangement reduces a cutting efficacy of the knife arrangement. This results in an increased amount of torque needed to perform a same cutting of plant material during a baling procedure. By monitoring a torque applied by/to a drivetrain for a knife arrangement, it is therefore possible to derive or predict a condition of the knife arrangement, particularly of one or more knives in the knife arrangement.

Proposed approaches can be employed in a baler or an agricultural baling system comprising such a baler.

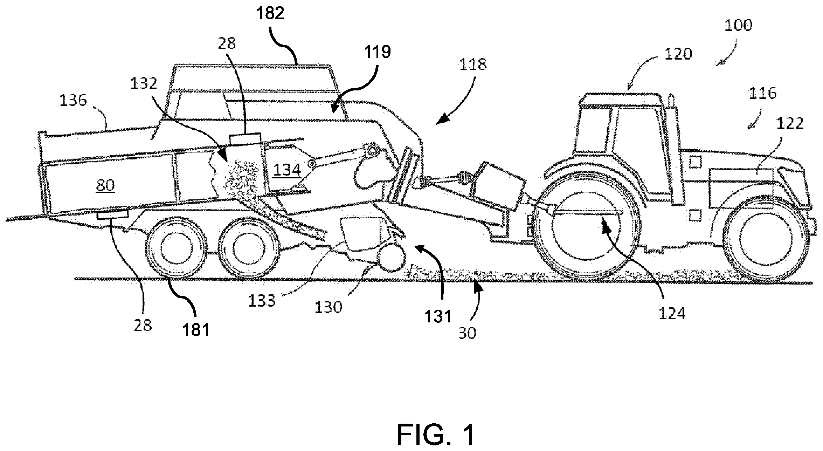

FIG. 1 conceptually illustrates an agricultural baler system 100 for improved contextual understanding. The illustrated agricultural baler system 100 is illustrated during the process of baling plant material 30 (e.g., a windrow, swath or other crop material) from the ground into bales 80, i.e., to form baled plant material.

The agricultural baler system 100 includes a towing vehicle 116 and a baler 118. The towing vehicle 116 may include a cab 120 in which an operator may be located, an engine 122 operable to move the towing vehicle 116, and a power take-off (PTO) 124 operable to transfer mechanical power from the engine 122 to the baler 118. The towing vehicle 116 may, for instance, be a tractor or other form of agricultural vehicle.

The illustrated first baler 118 is a "rectangular baler" configured to produce rectangular bales.

However, the skilled person will appreciate that, in the context of the present disclosure, the baler 118 is merely illustrative, and that other types of baling devices may be used to form the crop material 30 into bales 80. Examples include round balers as described in U.S. Patent 8,291,687, "Continuous Round Baler," granted October 23, 2012; and U.S. Patent 8,833,247, "Giant Round Baler Compressor," granted September 16, 2014.

The baler 118 comprises baling machinery 119 configured to perform the baling of plant material. The illustrated baler further comprises wheels 181 and/or a support structure 182 for the baling machinery.

The baling machinery 119 as shown has a fore-and-aft extending baling chamber 132, within which the bales 80 of plant material 30 are prepared. The baling machinery 119 is depicted as an "in-line" type of baler, wherein portions of plant material 30 are picked up below and slightly ahead of the baling chamber 132 and then loaded up into the bottom of chamber 132 in a straight line path of travel. A pickup assembly 130 collects the plant material 30 at an intake 131 or inlet and passes it to a stuffer chute assembly 133. The stuffer chute assembly 133 may extend generally rearward and upward from an inlet opening just behind the pickup assembly 130 to an outlet opening at the bottom of the baling chamber 132. In the particular illustrated embodiment, the baling machinery 119 is an "extrusion" type baler in which the bale discharge outlet at the rear of the baling machinery is generally smaller than upstream portions of the chamber, such that the outlet restricts the freedom of movement of a previous portion and provides back pressure against which a reciprocating plunger 134 within the baling chamber 132 can act to compress portions of plant material 30 into the next bale. The dimensions of the discharge outlet and the squeeze pressure on the bales at the outlet are controlled by a compression mechanism.

The plunger 134 reciprocates within the baling chamber 132 in compression and retraction strokes across the opening at the bottom of the baling chamber 132. The reciprocating plunger 134 presses portions of the plant material 30 against a previously formed and tied bale 80 to form a new bale. This action also causes both bales to intermittently advance toward a rear discharge opening of the baling machinery. The completed bales 80 are tied with binding material or a similar twine. Once tied, the bales are discharged from the rear end of the bale-forming chamber 132 onto a discharge in the form of a chute, generally designated 136.

The baling machinery 119 may comprise a sensing arrangement configured to monitor one or more properties of the baling machinery and/or plant material processed by the baling machinery. For instance, the baling machinery may comprise a sensor 28 positioned to sense one or more properties of the plant material in the baling chamber 132, e.g., a moisture level of the plant material.

It is common for a baler, i.e., the baling machinery, to comprise a knife arrangement, comprising one or more knives, configured to process plant material received by the baler before the plant material is passed into the baling chamber, i.e., downstream of the baling chamber.

In particular, the knife arrangement may typically be positioned between the pickup assembly 130 and the baling chamber 132. In particular, the knife arrangement may form part of the stuffer chute assembly 133 or be positioned between the pickup assembly 130 and the stuffer chute assembly 133. The knife arrangement is designed to cut the plant material into smaller pieces, for improved ease of baling the plant material.

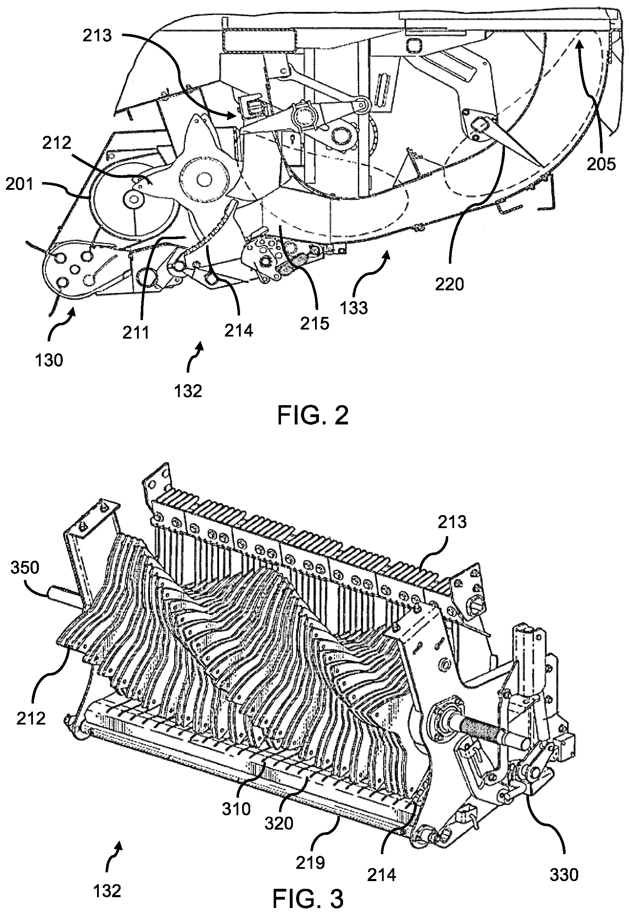

FIG. 2 illustrates an example of a portion of baling machinery for improved contextual understanding. The skilled person will appreciate that the illustrated example is purely representative, and that a wide variety of other designs and configurations for baling machinery will be apparent to the appropriately skilled person.

The pickup assembly 130 is configured to pick up or lift plant material from a ground surface. This plant material is then passed through to the knife arrangement 132. In particular examples, an augur mechanism 201 is configured to move the plant material from the pickup assembly 130 to the knife arrangement, and more specifically to a cutting zone 211 of the knife arrangement 132. Within the cutting zone 211, the plant material is cut (up), i.e., processed, by one or more knives 211 of the knife arrangement 132. The cut plant material then passes through to the stuffer chute assembly 133, e.g., to a transportation zone 215 behind the knife arrangement 132. The stuff chute assembly moves the (cut) plant material from the knife arrangement towards the baling chamber (not visible in FIG. 2). FIG. 2 illustrates a location of an opening 205 between the stuffer chute assembly 133 and the baling chamber. This can be performed, for instance, using a stuffer 220 or similar component.

In this way, the knife arrangement 132 may be located downstream (with respect to a flow of plant material through the baler) of the pickup assembly 130 and upstream of the (e.g., opening 205 to the) baling chamber.

By way of working example, the knife arrangement 132 may be formed from a rotor 212, a bank of one or more strippers 213; and a set of one or more knives 214, e.g., embedded in a knife bed 219.

The rotor 212 and the set of one or more knives 214 may co-operate together to sever or cut plant material in the cutting zone 211 into smaller pieces. In particular, rotor 212 may enter the cutting zone 211 and propel the plant material in the cutting zone 211 towards the transportation zone 215, pressing the plant material against the set of one or more knives whilst doing so. In this way, cutting of the plant material occurs as the rotor 212 moves the plant material from the cutting zone 211 to the transportation zone 215. Plant material which might otherwise be carried by the rotor 212 after the passage into the transportation zone is stripped therefrom by the stripper(s) 213. In other words, the stripper(s) 213 strip cut plant material from the rotor 212.

The illustrated rotor comprises a series of generally star-shaped blades arranged in a helical or spiral pattern, although V-shaped arrangements or a variety of others are permissible, as well. The rotor may also be designed to cut the plant material, e.g., carry at least some of the knives for cutting the plant material.

The knife bed 219 may include a series of knives that cooperate with the points of the one or more knives 212 to improve the cutting of the plant material.

FIG. 3 provides a perspective view of an example knife arrangement for improved contextual understanding. The knife arrangement 132 comprises the rotor 212, the stripper(s) 213 and the set of one or more knives 214 - here formed in a knife bed 219.

As previously explained, the set of one or more knives are able to co-operate the blades of the rotor 212 to reduce incoming crop materials into small pieces. The set of one or more knives are arranged to project upwardly between each pair of blades so that as the points on a pair of blades sweep downwardly and then rearwardly through the cutting zone, they pass on opposite sides of a corresponding knife, causing any carried plant material to be cut.

By way of example, each knife may have a serrated cutting edge that generally faces the cutting zone. As shown in FIG. 3, each knife may project up through slits 310 in a top wall 320 of the knife bed.

FIG. 3 also illustrates a knife lowering mechanism 330. The knife lowering mechanism is controllable to disengage the set of one or more knives from the remainder of the knife arrangement, e.g., to expose the set of one or more knives to an external environment. This facilitates maintenance (e.g., sharpening) and/or replacement of each knife. In particular, the knife lowering mechanism allows each knife to be accessed (e.g., by an operator) for maintenance and/or sharpening.

Suitable designs for knife lowering mechanisms are well known in the art, such as that put forward by United States Patent Application No. US 2013/0316770 A1, amongst others.

It will be appreciated that the rotation of the rotor 212 is controlled by a motor (not visible in FIG. 3) via a drivetrain 350, a part of which is illustrated in FIG. 3. The motor controls at least the speed of rotation of the rotor 212, to thereby control how quickly plant material is moved from the cutting zone to the transportation zone, and therefore how quickly the plant material is cut. The speed of the rotor 212 may be changed, for instance, dependent upon the rate of plant material received at the cutting zone, e.g., the rate of plant material flow at an intake to the baler. The drivetrain thereby applies torque to the rotor to control the cutting or processing of plant material received by the baler. The motor may form part of the baler itself or, alternatively, be separate to the baler. For instance, as illustrated in FIG. 1, the drivetrain may be driven by a power take-off (PTO) 124 of a towing vehicle of the baler that is operable to transfer mechanical power from the engine 122 of the towing vehicle to the baler.

A drivetrain is a common component of balers for powering or driving a knife arrangement of the baler. In general, the drivetrain connects a motor (e.g., of the baler or a towing vehicle) to the knife arrangement. The drive train is configured to perform mechanical movement of one or more elements of the knife arrangement, such as a rotor for moving material (as illustrated in Figs. 2 and 3) or for moving one or more knives of the knife arrangement.

The present disclosure provides a mechanism for generating information about the condition of the knives in a knife arrangement. It is recognized that continued operation of a baler inevitably leads to any knives in the knife arrangement becoming progressively blunter and less efficient. This deterioration in performance is a natural consequence of the knife arrangement's repeated contact with plant material during the baling process.

In addition to the gradual blunting of the knives, there is also the risk of the knives breaking or becoming damaged. This can result, for instance, from the presence of foreign material, such as stones or other debris, mixed in with the plant material being processed. When the knives come into contact with these foreign objects, they can chip, crack, or even shear completely. This not only affects the efficiency of the baler but can also lead to costly repairs and downtime.

Therefore, the ability to monitor the condition of the knives and generate information about their condition/state is of great value. This information can be used to schedule maintenance or replacement of the knives, thereby ensuring the baler operates at its optimum efficiency and reducing the risk of unexpected breakdowns. The present disclosure provides a mechanism for generating this knife condition information, contributing to more efficient and reliable operation of the baler.

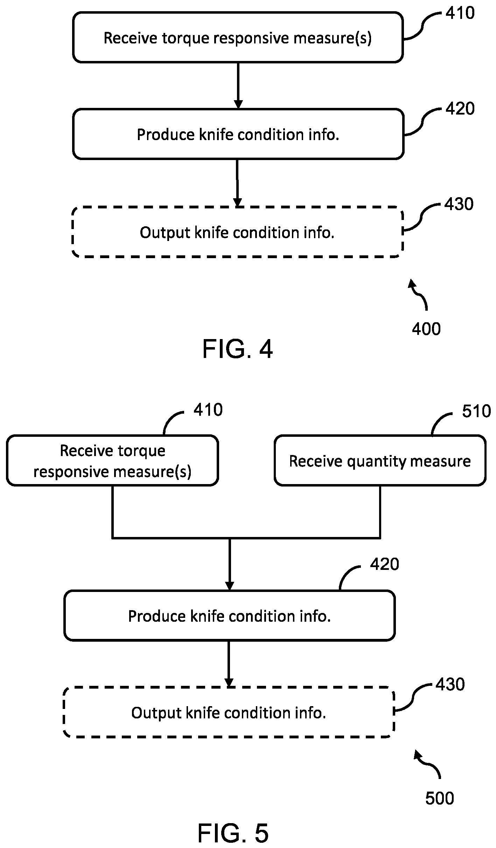

FIG. 4 is a flowchart illustrating a proposed computer-implemented method 400 for generating knife condition information for a knife arrangement of a baler. As previously explained, the knife arrangement is configured to process plant material received by the baler and an example of a suitable knife arrangement has been previously provided.

The computer-implemented method 400 comprises a step 410 of receiving at least one torque responsive measure. Each torque responsive measure is configured to change responsive to a change in a torque applied by a drivetrain for the knife arrangement of the baler.

One example of a suitable torque responsive measure is a (direct) measure of the torque applied by the drivetrain. Suitable examples of torque measurers or torque sensors are known in the art, such as rotary torque sensors, torque transducers, dynamometers, hydraulic torque sensors, acoustic torque sensors and/or optical torque sensors.

Another example of a suitable torque responsive measure is a measure of a hydraulic pressure supplied to a motor for the drivetrain of the knife arrangement of the baler. Another example of a suitable torque responsive measure is a measure of electrical power supplied to (i.e., drawn by) a motor for the drivetrain of the knife arrangement of the baler. These examples are particularly advantageous and accurate when the speed of rotation of a drivetrain is fixed.

Another example of a suitable torque responsive measure is a measure of speed of (rotation of) the drivetrain. This example is particularly advantageous when a hydraulic pressure and/or electrical power drawn by the drivetrain is constant, as the speed will change together with the torque.

Accordingly, step 410 may comprise generating at least one torque responsive measure using one or more sensors configured to generate the one or more torque responsive measures by monitoring the baling machinery and/or the plant material. For instance, the one or more sensors may comprise a rotary torque sensor configured to generate the torque responsive measure.

The computer-implemented method 400 may also comprise a step 420 of processing the at least one torque responsive measure to produce knife condition information indicating a condition of the knife arrangement. A wide variety of techniques for processing one or more torque responsive measures to produce knife condition information are envisaged, and a non-exhaustive set of examples is hereafter described.

By way of example, step 420 may comprise comparing each torque responsive measure to a respective threshold; and configuring the knife condition information responsive to whether or not any torque responsive measure breaches its respective threshold. For instance, the knife condition information may indicate that a condition of the knife arrangement has deteriorated (e.g., in need of maintenance, replacement and/or (if relevant) sharpening) responsive to any torque responsive measure breaching its threshold, and indicate that the condition of the knife arrangement has not deteriorated otherwise.

In some examples, step 420 may comprise comparing each torque responsive measure to a respective threshold; and configuring the knife condition information responsive to whether or not any torque responsive measure breaches its respective threshold for no less than a respective predetermined duration. For instance, the knife condition information may indicate that a condition of the knife arrangement has deteriorated (e.g., in need of maintenance, replacement and/or (if relevant) sharpening) responsive to any torque responsive measure breaching its threshold for no less than a respective predetermined duration, and indicate that the condition of the knife arrangement has not deteriorated otherwise.

The predetermined duration may be set to be no less than 1 minute. In some instances, this duration could be extended to no less than 5 minutes, or even no less than 30 minutes. This is because, in practice, a baler is typically used over a substantial period of time. During this extended operation, the torque applied by the drivetrain for the knife arrangement can experience considerable fluctuations. These variations in torque can be attributed to changes in the type or condition of the plant material being processed. Additionally, there may be gaps or pauses between the processing of different batches of plant material, which can also lead to variations in the applied torque. By setting a relatively long duration for the threshold breach, the effects of these variations can be mitigated. This ensures that temporary spikes or drops in the torque, which may not necessarily indicate a deterioration in the knife condition, do not trigger a false alarm. Instead, a consistent breach of the threshold over the predetermined duration serves as a more reliable indicator of a potential issue with the knife arrangement, warranting further investigation or maintenance.

In some scenarios the at least one torque responsive measure comprises at least two different torque responsive measures (e.g., responsive to the torque applied by different drivetrains). In such examples, step 420 may comprise comparing the torque responsive measures to one another and, responsive to a difference in the indicated torque breaching a predetermined threshold (e.g., for no less than a respective predetermined duration), configuring the knife condition information to indicate that a condition of the knife arrangement has deteriorated. This approach allows, for instance, an unbalanced cutting action of the knife arrangement to be identified.

As yet another example, step 420 may comprise comparing tracking each torque responsive measure and, responsive to a sudden or step change in the torque responsive measure, indicating that a condition of the knife arrangement has deteriorated. A sudden/step change in the torque responsive measure may indicate a sudden deterioration of the condition of the knife arrangement, e.g., due to a breakage and/or damage or the like. A sudden or step change may be defined as a change in the value of the torque responsive measure, within a predetermined time window, that breaches a predetermined change value (i.e., a predetermined threshold). As another example, a sudden or step change may be defined as a gradient of the torque responsive measure that breaches a predetermined gradient.

As yet another example, step 420 may comprise comparing each torque responsive measure to an auxiliary torque responsive measure for a different drivetrain for a different component of the baler (e.g., a drivetrain for the pickup assembly). A substantial difference (e.g., for no less than a respective predetermined duration) or sudden change in the difference between the torque responsive measures for different drivetrains may indicate a deterioration in knife condition. Thus, it will be appreciated that step 410 may be adapted to further comprising receiving at least one auxiliary torque responsive measure. Each auxiliary torque responsive measure is configured to change responsive to a change in a torque applied by a drivetrain for another component (i.e., not the knife arrangement) of the baler.

The knife condition information may be defined using binary, categorical and/or numeric data, amongst others. For instance, the knife condition information may be a binary value indicating whether the condition of the knife condition information is "Acceptable" or "Not Acceptable, i.e., whether or not the knife condition has deteriorated. A categorical priority may indicate a discrete value (e.g., a "Good", "Acceptable" or "Poor" condition of the knife arrangement). A numeric value for the condition of the knife arrangement may be defined with respect to a predetermined scale. A predetermined scale may range from 0 to 1, 0 to 10, 1 to 10, 0 to 100 or 1 to 100, although other suitable scales will be apparent to the skilled person.

Preferably, the knife condition information indicates a cutting efficacy of the knife arrangement. It has been recognized that the torque applied by a drivetrain for the knife arrangement changes responsive to a cutting efficacy of the knife arrangement. This approach thereby recognizes that it is possible to derive a measure or indicator of the cutting efficacy of a knife arrangement from one or more torque measures of a drivetrain for the knife arrangement.

Method 400 may further comprise a step 430 of outputting the knife condition information.

In some examples, step 430 comprises controlling a user interface to provide a user-perceptible output representing the knife condition information. For instance, step 430 may comprise controlling a display to provide a visual representation of the knife condition information. As another example, where the knife condition information has a binary value, step 430 may comprise controlling a light (e.g., a beacon or flashing light) responsive to the knife condition information, e.g., to only emit light when the knife condition information indicates that the knife condition has deteriorated.

In some examples, step 430 comprises passing the knife condition information to a further processing system or device for performing further processing. For instance, the knife condition information may be passed to a control system configured to determine whether or not to perform an automated replacement/sharpening/maintenance of the knife arrangement responsive to the knife condition information.

In some examples, step 430 comprises storing the knife condition information in a memory or other storage unit. Examples are well known to the skilled person.

FIG. 5 is a flowchart illustrating a variant computer-implemented method 500 for generating knife condition information for a knife arrangement of a baler.

As before, the method 500 comprises a step 410 of receiving at least one torque responsive measure and step 420 of processing the at least one torque responsive measure to produce knife condition information indicating a condition of the knife arrangement. Of course, method 500 may (optionally) also comprise step 430 of outputting the knife condition information.

The method 500 further comprises a step 510 of receiving a quantity measure. The quantity measure indicates an amount of plant material processed by the knife arrangement.

In particular, the quantity measure may indicate or represent a rate of plant material processed by the knife arrangement (e.g., at the point in time that the at least one torque responsive measure is obtained).

In some examples, the quantity measure may indicate or represent a rate of plant material at a point before or after the knife arrangement in a flow of plant material through the baler, i.e., upstream or downstream of the flow of plant material through the baler.

For instance, the quantity measure may indicate a rate of plant material flow at an intake to the baler, e.g., a rate at which plant material is picked up by the pickup assembly. As another example, the quantity measure may indicate a growth rate of a bale formed by the baler (e.g., in the baling chamber) using the plant material processed by the knife arrangement. Both of these measures change responsive to an amount of plant material processed by the knife arrangement.

Step 420 may further comprise processing the quantity measure, together with the at least one torque responsive measure, to produce the knife condition information.

In particular examples, step 420 comprises scaling or normalizing each at least one torque responsive measure using the quantity measure. The scaling may, for instance, comprise dividing each at least one torque responsive measure by the quantity measure. This provides a relative measure of torque applied by the drivetrain with respect to the rate of plant material being processed.

It has been recognized that the torque applied by a drivetrain of a knife arrangement is also affected or influenced by the amount of plant material processed by the knife arrangement. In general, the more plant material processed by the knife arrangement the greater the torque applied by the drivetrain. By scaling or normalizing the torque responsive measure(s) using the proposed technique, the effect of different rates of plant material being processed of the torque responsive measure can be mitigated.

After scaling the torque responsive measure(s), they may be processed according to any previously described technique to produce the knife condition information. In some examples, the scaled torque responsive measures are suitable for acting as the knife condition information by themselves.

As another example, previous examples describe how the generation of the knife condition information in step 420 may make use of one or more predetermined thresholds. For instance, each torque responsive measure may be compared to a respective threshold and, if any threshold is breached, the knife condition information indicates that the knife condition of the knife arrangement has deteriorated. In such examples, the quantity measure may be used to define the/each threshold. For instance, a look-up table may map a quantity measure to a set of one or more thresholds for the respective one or more torque responsive measures.

Other example approaches for making use of the torque responsive measure(s) and the quantity measure(s) will be apparent to the appropriately skilled person.

Of course, step 510 may comprise obtaining more than one quantity measure. In such examples, previously disclosed embodiments can be readily adapted to make use of more than one quantity measure. For instance, step 420 may comprise scaling or normalizing each at least one torque responsive measure using the quantity measures (e.g., dividing each torque responsive measure by the sum/average/product of the quantity measures). As another example, step 510 may comprise using the two or more quantity measures to identify appropriate one or more thresholds, e.g., using a multi-dimensional look-up table or the like.

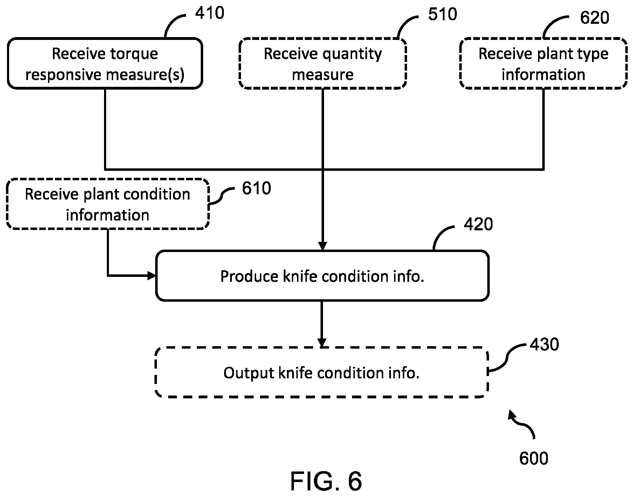

FIG. 6 is a flowchart illustrating a variant computer-implemented method 600 for generating knife condition information for a knife arrangement of a baler, which illustrates further optional features for proposed embodiments. It will be appreciated that, although illustrated in FIG. 6, previously described step 510 is optional, any may be omitted in some examples.

In some examples, the method 600 comprises a step 610 of receiving plant condition information, indicative of a condition of the plant material processed by the knife arrangement.

In some examples, the plant condition information indicates a moisture level of the plant material processed by the knife arrangement. This can be obtained, for instance, from a moisture sensor positioned in the baler, e.g., in the cutting zone of the baler, within the pickup assembly of the baler or within the baling chamber of the baler. A wide variety of other suitable positions and configurations for the moisture sensor will be readily apparent to the skilled person.

In some examples, the plant condition information may indicate a (average) size of the plant material processed by the knife arrangement. As another example, the plant condition information may indicate maturity stage of the plant material, for instance, whether the plant material is "mature", "semi-mature", or "immature".

Where step 610 is performed, then step 420 is appropriately modified such that processing the at least one torque responsive measure comprises processing each at least one torque responsive measure further using the plant condition information.

By way of example, if one or more predetermined thresholds are used in the determination of the knife condition information, the plant condition information may be used to define the/each threshold. For instance, a look-up table may map plant condition information to a set of one or more thresholds for the respective one or more torque responsive measures. Of course, if step 510 is performed, then the quantity measure(s) may also be used to perform the identification of the predetermined threshold(s), e.g., using a multi-dimensional look-up table or the like, and/or to scale the torque responsive measure(s), as previously disclosed.

As another example, where the plant condition information contains one or more quantitative measures (such as a measure of moisture), then step 420 may comprise scaling the torque responsive measure(s) using the quantitative measure(s), e.g., dividing each torque-torque responsive measure(s) by the quantitative measure or the sum/product/average of the quantitative measures. Other suitable variants will be apparent to the skilled person.

In some examples, the method 600 comprises a step 620 of receiving plant type information, indicative of a type of plant material processed by the knife arrangement. The plant type information may be generated automatically (e.g., using an image analysis technique on one or more images generated by a camera of the baler) or by a user, e.g., providing information at a user interface. For instance, a user could select the type of plant material from a list or menu displayed on the user interface. As another example, the plant type information could be provided by a user through a barcode or OR code scanner.

The plant type information may, for instance, indicate a classification of the plant material, e.g., indicating an order, family or genus of the plant material. In some examples, the plant type information indicates a type of feedstuff, e.g., whether the plant material is "hay", "silage", "straw" or another type of feedstuff.

Where step 620 is performed, then step 420 is appropriately modified such that processing the at least one torque responsive measure comprises processing each at least one torque responsive measure further using plant type information.

The type of feedstuff, which refers to the specific kind of plant material being processed by the baler, can greatly influence the amount of force that the knife arrangement has to apply. Each of these types of feedstuff has distinct physical properties that affect how easily they can be cut by the knife arrangement. Silage, for instance, is a type of feedstuff that is often denser and wetter than other types of plant material. This is because silage is typically made from green fodder that is preserved by fermentation. As a result, silage tends to be tougher and requires more force to be cut by the knife arrangement. On the other hand, straw and hay are generally drier and less dense than silage. Straw, which is the dry stalks of cereal plants left over after the grain has been harvested, and hay, which is dried grass, are both relatively easy to cut through. Therefore, the knife arrangement would require less force to process these types of feedstuff. Therefore, the type of feedstuff is a valuable piece of information for aiding in the accurate determination of the condition of the knife arrangement, as it directly influences the torque applied by the drivetrain.

By way of example, if one or more predetermined thresholds are used in the determination of the knife condition information, the plant type information may be used to define the/each threshold. For instance, a look-up table may map plant type information to a set of one or more thresholds for the respective one or more torque responsive measures. Of course, if step 510 is performed, then the quantity measure(s) may also be used to perform the identification of the predetermined threshold(s), e.g., using a multi-dimensional look-up table or the like, and/or to scale the torque responsive measure(s), as previously disclosed.

It will be appreciated that, in some examples, both steps 610 and 620 are performed.

The skilled person would be readily capable of developing a processing system for carrying out any herein described method. Thus, each step of the flow chart may represent a different action performed by a processing system, and may be performed by a respective module of the processing system.

Examples of suitable sensors for generating one or more torque responsive measures have been previously described.

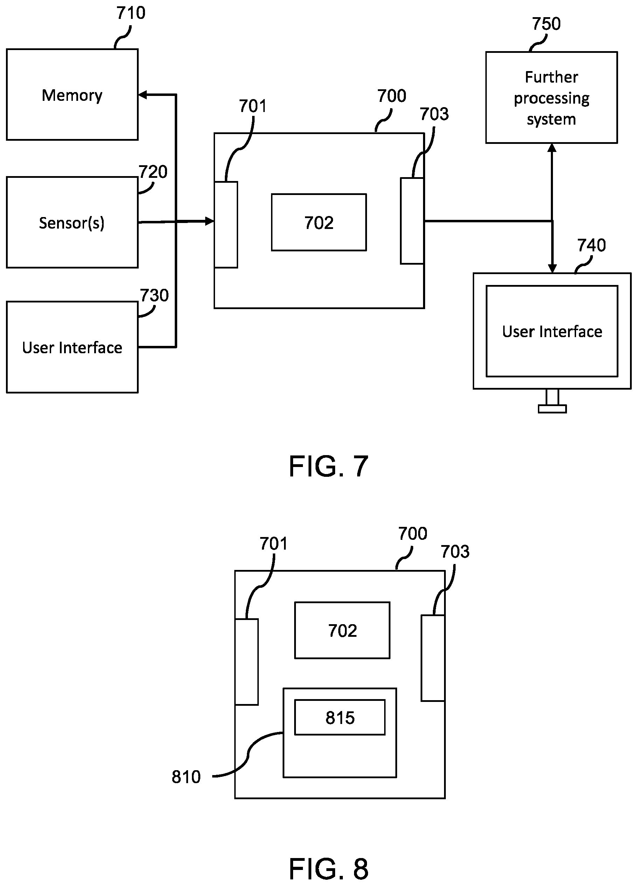

FIG. 7 illustrates a processing system 700 according to an embodiment. The processing system is configured to perform any herein disclosed method 400, 500, 600.

The processing system 700 may thereby receive at least one torque responsive measure. Each torque responsive measure is configured to change responsive to a change in a torque applied by a drivetrain for the knife arrangement of the baler. The processing system 700 may receive these values from a memory or storage unit 710 and/or from one or more sensors 720.

The processing system may be further configured to obtain a quantity measure, plant condition information and/or plant type information. The processing system may receive these values from a memory or storage unit 720, from one or more sensors 720 and/or from one from a user interface 730.

More particularly, the processing system 700 may comprise an input interface 701 configured to receive all of the above-identified values.

The processing system 700 is also configured to process the at least one torque responsive measure to produce knife condition information indicating a condition of the knife arrangement This may be carried out by a processing unit 702 of the processing system 700.

The processing system 700 may be configured to output the knife condition information. Any output of the processing system may be controlled via an output interface 703. In particular, the output of the processing system may be defined by the processing unit 702 of the processing system via the processing unit.

The processing system 700 may, for instance, store the knife condition information in a memory or storage unit 710 and/or control a user interface 740 to provide a user perceptible output of the knife condition information and/or pass the knife condition information to a further processing system 750 for further processing.

FIG. 8 illustrates an embodiment of the processing system 700 described with reference to FIG. 7. The processing system is able to carry out or perform one or more embodiments of an invention, e.g. for generating knife condition information for a knife arrangement of a baler.

The processing system 700 comprises an input interface 701 that receives communications from one or more inputting devices. Examples of suitable inputting devices include external memories, sensors, user interfaces (such as mice, keyboards, microphones, and so on).

The processing system 700 also comprises a processing unit 702.

In one example, the processing unit 702 may comprise an appropriately programmed or configured single-purpose processing device. Examples may include appropriately programmed field-programmable gate arrays or complex programmable logic devices.

As another example, the processing unit may comprise a general purpose processing system (e.g. a general purpose processor or microprocessor) that executes a computer program 815 comprising code (e.g. instructions and/or software) carried by a memory 810 of the processing system 700.

The memory 810 may be formed from any suitable volatile or non-volatile computer storage element, e.g. FLASH memory, RAM, DRAM, SRAM, EPROM, PROM, CD-ROM and so on. Suitable memory architectures and types are well known to the person skilled in the art.

The computer program 815, e.g. the software, carried by the memory 810 may include comprise a sequence or set of instructions that are executable by the processing unit for implementing logical functions to carry out the desired method or procedure. Each instruction may represent a different logical function, step or sub-step used in performing a method or process according to an embodiment. The computer-program may be formed from a set of subprograms, as would be known to the skilled person. The computer program 815 may be written in any suitable programming language that can be interpreted by the processing unit 702 for executing the instructions. Suitable programming languages are well known to the skilled person.

The processing system 700 may also comprise an output interface 703. The processing system may be configured to provide information, such as the knife condition information, via the output interface. In some examples, the processing system may be configured to control one or more other devices connected to the output interface 703 by providing appropriate control signals to the one or more other devices. Suitable control examples include controlling a visual representation (e.g. of the knife condition information) at a user interface or controlling the operation of one or more other components of the baler.

Different components of the processing system 700 may interact or communicate with one another via one or more intra-system communication systems (not shown), which may include communication buses, wired interconnects, analogue electronics, wireless communication channels (e.g. the internet) and so on. Such intra-system communication systems would be well known to the skilled person.

It is not essential for the processing system 700 to be formed on a single device, e.g. a single computer. Rather, any of the system blocks (or parts of system blocks) of the illustrated processing system may be distributed across one or more computers.

There is also provided a baler comprising: the processing system; baling machinery configured to bale plant material received by the baling machinery, wherein the baling machinery comprises the knife arrangement; and one or more sensors configured to generate the one or more torque responsive measures by monitoring the baling machinery and/or the plant material.

It will be understood that disclosed methods are preferably computer-implemented methods. As such, there is also proposed the concept of a computer program comprising code means for implementing any described method when said program is run on a processing system, such as a computer. Thus, different portions, lines or blocks of code of a computer program according to an embodiment may be executed by a processing system or computer to perform any herein described method.

A computer program may be stored on a computer-readable medium, itself an embodiment of the invention. A "computer-readable medium" is any suitable mechanism or format that can store a program for later processing by a processing system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A computer-implemented method for generating knife condition information for a knife arrangement of a baler, wherein the knife arrangement is configured to process plant material received by the baler, the computer-implemented method comprising:
receiving at least one torque responsive measure, wherein each torque responsive measure is configured to change responsive to a change in a torque applied by a drivetrain for the knife arrangement of the baler; and
processing the at least one torque responsive measure to produce knife condition information indicating a condition of the knife arrangement.

2. The computer-implemented method of claim 1, wherein the at least one torque responsive measure comprises a measure of the torque applied by the drivetrain for the knife arrangement of the baler.

3. The computer-implemented method of any one of claims 1 or 2, wherein the at least one torque responsive measure comprises a measure of a hydraulic pressure and/or electrical power supplied to a motor for the drivetrain of the knife arrangement of the baler.

4. The computer-implemented method of any one of claims 1 to 3, further comprising receiving a quantity measure, wherein the quantity measure indicates an amount of plant material processed by the knife arrangement,
wherein the processing the at least one torque responsive measure comprises processing each at least one torque responsive measure further using the quantity measure.

5. The computer-implemented method of claim 4, wherein the quantity measure indicates a rate of plant material flow at an intake to the baler.

6. The computer-implemented method of claim 4, wherein the quantity measure indicates a growth rate of a bale formed by the baler using the plant material processed by the knife arrangement.

7. The computer-implemented method of any one of claims 4 to 6, wherein processing each at least one torque responsive measure comprises scaling each at least one torque responsive measure using the quantity measure.

8. The computer-implemented method of any one of claims 1 to 7, further comprising receiving plant condition information, indicative of a condition of the plant material processed by the knife arrangement,
wherein the processing the at least one torque responsive measure comprises processing each at least one torque responsive measure further using the plant condition information.

9. The computer-implemented method of claim 8, wherein the plant condition information indicates a moisture level of the plant material processed by the knife arrangement.

10. The computer-implemented method of any one of claims 1 to 7, further comprising receiving plant type information, indicative of a type of plant material processed by the knife arrangement,
wherein the processing the at least one torque responsive measure comprises processing each at least one torque responsive measure further using the plant type information.

11. The computer-implemented method of any of claims 1 to 10, wherein the knife condition information indicates a cutting efficacy of the knife arrangement.

12. The computer-implemented method of any one of claims 1 to 11, wherein processing the at least one torque responsive measure comprises:
comparing each torque responsive measure to a respective threshold; and
configuring the knife condition information responsive to whether or not any torque responsive measure breaches its respective threshold.

13. A computer program product comprising computer program code means which, when executed on a computing device having a processing system, cause the processing system to perform all of the steps of the computer-implemented method according to any of claims 1 to 12.

14. A processing system for generating knife condition information for a knife arrangement of a baler, wherein the knife arrangement is configured to process plant material received by the baler, the processing system being configured to:
receive at least one torque responsive measure, wherein each torque responsive measure is configured to change responsive to a change in a torque applied by a drivetrain for the knife arrangement of the baler; and
process the at least one torque responsive measure to produce knife condition information indicating a condition of the knife arrangement.

15. A baler comprising:
the processing system of claim 14;
baling machinery configured to bale plant material received by the baling machinery, wherein the baling machinery comprises the knife arrangement; and
one or more sensors configured to generate the one or more torque responsive measures by monitoring the baling machinery and/or the plant material.
